# FASCICULE DE BREVET EUROPEEN

(11) **EP 3 402 015 B1**
(45) Date de publication et mention de la délivrance du brevet: **06.01.2021**
(21) Numéro de dépôt: 18290047.2
(22) Date de dépôt: 07.05.2018
(51) Int. Cl.: H01S 3/16, H01S 3/094, H01S 3/06, H01S 3/0941

(54) **PLAQUE D'ÉLÉMENT ACTIF POUR SOURCE LASER ET SOURCE LASER COMPORTANT UNE TELLE PLAQUE**
PLATTE AUS EINEM AKTIVEN ELEMENT FÜR LASERQUELLE, UND LASERQUELLE, DIE EINE SOLCHE PLATTE UMFASST
ACTIVE ELEMENT PLATE FOR LASER SOURCE AND LASER SOURCE COMPRISING SUCH A PLATE

(30) Priorité: 12.05.2017 FR 1700512
(43) Date de publication de la demande: 14.11.2018
(73) Titulaire: Compagnie Industrielle des Lasers Cilas, 45100 Orléans (FR)
(72) Inventeur: SABOURDY, David, 45000 Orléans (FR); MONTAGNE, Jean-Eucher, 45000 Orléans (FR); MARTINS-SANTANA, Alexandre, 45100 Orléans la Source (FR); NGUYEN DUY, Luc, 92160 Antony (FR)
(74) Mandataire: Gevers & Orès

(56) Documents cités:
- WO-A1-99/33150
- FR-A1- 2 885 267
- US-A1- 2003 161 375
- US-A1- 2016 326 667
- US-B1- 8 514 906

## Description

### DOMAINE TECHNIQUE

La présente invention concerne le domaine des plaques (ou « slab » en anglais) d'élément actif pour source laser ainsi qu'une source laser comportant une telle plaque.

### ÉTAT DE LA TECHNIQUE

Une source laser comprend, en général, une cavité résonante dans laquelle se situe un milieu amplificateur. L'excitation du milieu amplificateur (ou milieu actif) est obtenue par un faisceau de pompage émis par une source de pompage. Le faisceau de pompage permet une inversion de population favorisant une émission stimulée générant le rayonnement laser.

La compacité d'une source laser est un enjeu important lorsque cette source équipe un dispositif devant être compact. Les dimensions de la source laser peuvent être un inconvénient important lorsque le dispositif est portable.

De plus, lorsque le dispositif est soumis à des variations de température, il est important que la source laser soit peu sensible à ces variations. Dans le cas de lasers solides pompés par diode, ce dernier point peut être critique compte tenu du fait que la longueur d'onde centrale des diodes laser standard dérive d'environ 0,25 nm/°C. Selon le profil du spectre d'absorption des ions dopants considérés, l'énergie du laser peut alors être affectée.

Par exemple, il existe des lasers pompés par diodes dits lasers athermaux.

De façon générale, le principe de ces sources est basé sur un pompage longitudinal de barreaux amplificateur dopés. Un guidage de la pompe est alors assuré dans le barreau de sorte que la longueur d'absorption varie selon la température d'opération et le coefficient d'absorption associé.

Généralement, le faisceau de pompage est issu d'un empilement de diodes puis collecté par un dispositif optique pour être injecté à l'entrée du barreau amplificateur.

Par exemple, dans le cas du pompage longitudinal d'un barreau de cristal de YAG dopé Nd de longueur 80 mm, nécessaire pour absorber au moins 90% du faisceau de pompage, la longueur totale de l'ensemble pompage et barreau amplificateur peut atteindre 130 mm.

Dans cette configuration, une partie significative de la longueur de cavité est dictée par les dimensions du milieu actif et de sa source de pompage associé générant le faisceau de pompage.

Dans le contexte de la présente invention, il est fait référence aux documents suivants:
- US 2003/161375 A1 (FILGAS) 28 août 2003
- US 2016/326667 A1 (KOLIS) 10 novembre 2016 (2016-11-10)
- WO 99/33150 A1 (RAYTHEON CO [US]) 1 juillet 1999 (1999-07-01)
- FR 2 885 267 A1 (CILAS) 3 novembre 2006 (2006-11-03)
- US 8 514 906 B1 (MURRAY JAMES THOMAS [US]) 20 août 2013 (2013-08-20)

Bien que ce type de solution fonctionne de manière satisfaisante, une solution plus compacte et efficace serait préférable.

### EXPOSÉ DE L'INVENTION

La présente invention a pour objet de pallier cet inconvénient en proposant une solution permettant d'obtenir une source laser de petites dimensions, peu sensible aux changements de températures.

À cet effet, l'invention concerne une plaque d'élément actif pour source laser telle que définie dans la revendication 1. Des modes de réalisation particuliers de l'invention sont détaillés dans les revendications dépendantes.

Il est précisé en outre que les modes de réalisations divulgués dans la présente description qui ne reprennent pas l'ensemble des caractéristiques techniques de la revendication 1 ne font pas partie de l'invention.

Selon l'invention, la plaque d'élément actif comprend :
- au moins une surface d'entrée d'un faisceau de pompage,
- une première partie en forme de barreau allongé selon un axe longitudinal qui inclut une première matrice dopée susceptible d'absorber le faisceau de pompage pour amplifier un rayonnement laser se propageant longitudinalement,
- une deuxième partie recouvrant au moins partiellement la première partie, la deuxième partie incluant une deuxième matrice dopée susceptible d'absorber le rayonnement laser et d'être transparente au faisceau de pompage,
- au moins une troisième partie en forme de barreau allongé selon l'axe longitudinal qui inclut une troisième matrice dopée susceptible d'absorber un rayonnement laser parasite, la première partie comportant deux sections entre lesquelles la troisième partie est prise en sandwich.

Ainsi, grâce à la matrice de la deuxième partie susceptible d'absorber le rayonnement laser, il est possible de réduire les modes d'émission parasite tout en limitant les pertes.

Selon une particularité, la première matrice dopée présente un indice de réfraction sensiblement égal à l'indice de réfraction de la deuxième matrice dopée.

Selon une particularité, la première matrice dopée et la deuxième matrice dopée présentent des indices de réfraction supérieurs à un indice de réfraction d'un milieu dans lequel la plaque est susceptible d'être utilisée.

Selon une variante, la première matrice dopée présente une concentration de dopage qui évolue le long de l'axe longitudinal de façon que la concentration de dopage à une première extrémité de la première partie proche de la ou des surfaces d'entrée est moins importante que la concentration de dopage à une deuxième extrémité la plus éloignée de la ou des surfaces d'entrée.

Selon une autre variante, la première matrice dopée présente une concentration de dopage qui évolue radialement de façon que la concentration de dopage dans une zone centrale de la première partie parallèle à l'axe longitudinal est plus importante que la concentration de dopage dans une zone la plus éloignée de la zone centrale.

Selon un mode de réalisation, la première partie en forme de barreau allongé possède une section transversale carrée, la deuxième partie comprenant deux portions de sections transversales rectangulaires entre lesquelles la première partie est prise en sandwich.

Selon un autre mode de réalisation, la première partie en forme de barreau allongé possède une section transversale circulaire, la deuxième partie comprenant deux portions de section transversale semi-annulaires épousant la forme de la première partie prise en sandwich entre les deux portions de la deuxième partie.

Selon un autre mode de réalisation, la deuxième partie possède une épaisseur supérieure à l'épaisseur de la première partie.

Selon une configuration, la deuxième partie comprend deux surfaces d'entrée du faisceau de pompage disposées symétriquement par rapport à l'axe longitudinal à une première extrémité de la plaque, les deux surfaces d'entrée étant inclinées par rapport à l'axe longitudinal.

Selon une autre configuration, la deuxième partie comprend quatre surfaces d'entrée du faisceau de pompage, deux surfaces d'entrée du faisceau de pompage étant disposées symétriquement par rapport à l'axe longitudinal à une première extrémité de la plaque et deux surfaces d'entrée du faisceau de pompage étant disposées symétriquement par rapport à l'axe longitudinal à une deuxième extrémité de la plaque, les quatre surfaces d'entrées étant inclinées par rapport à l'axe longitudinal.

Par exemple, la première matrice dopée comprend un grenat d'yttrium-aluminium dopé au néodyme.

En outre, la deuxième matrice dopée comprend un cristal dopé au samarium.

Selon un mode de réalisation, la plaque comprend au moins une couche de guidage qui recouvre deux surfaces qui correspondent aux surfaces comportant la jonction entre la première partie et la deuxième partie et ayant les plus grandes dimensions, la couche de guidage présentant un indice de réfraction inférieur à l'indice de réfraction de la première matrice dopée et de la deuxième matrice dopée.

La plaque comprenant en outre une couche d'absorption qui recouvre, au moins en partie, la couche de guidage, la couche d'absorption étant susceptible d'absorber le rayonnement laser.

L'invention concerne également une source laser comprenant :
- une plaque d'élément actif pour source laser,
- au moins une source de pompage susceptible d'émettre un faisceau de pompage pénétrant dans la plaque d'élément actif.

Selon l'invention, la plaque d'élément actif est une plaque d'élément actif du type de celui spécifié ci-dessus.

Selon une particularité, la ou les sources de pompage comprennent au moins une diode laser

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente une plaque d'élément actif selon un mode de réalisation,
- la figure 2 représente une plaque d'élément actif selon un autre mode de réalisation,
- la figure 3a représente une vue de la plaque d'élément actif dans une direction parallèle à l'axe longitudinal selon un mode de réalisation,
- la figure 3b représente une vue de la plaque d'élément actif dans une direction perpendiculaire à l'axe longitudinal,
- la figure 3c représente une vue de la plaque d'élément actif dans une direction parallèle à l'axe longitudinal selon un autre mode de réalisation,
- la figure 4 représente une partie d'une plaque d'élément actif selon un mode de réalisation.

### DESCRIPTION DÉTAILLÉE

La suite de la description fera référence aux figures citées ci-dessus.

L'invention concerne une plaque d'élément actif 1 pour source laser. Dans la suite de la description, la plaque d'élément actif 1 peut être également appelée plaque 1.

La plaque d'élément actif 1 comprend :
- au moins une surface d'entrée 5 d'un faisceau de pompage,
- une première partie 2 en forme de barreau qui est allongé selon un axe longitudinal 4. Cette première partie 2 inclut une première matrice dopée 2a susceptible d'absorber le faisceau de pompage pour amplifier un rayonnement laser se propageant selon l'axe longitudinal 4,
- une deuxième partie 3 recouvrant au moins partiellement la première partie, la deuxième partie incluant une deuxième matrice dopée 3a, 3b susceptible d'absorber le rayonnement laser et d'être transparente au faisceau de pompage.

Ainsi, le faisceau de pompage émis par une source de pompage 6 précisée ci-dessous peut pénétrer dans la première matrice dopée 2a à travers la deuxième matrice dopée 3a, 3b qui est transparente au faisceau de pompage. Le faisceau de pompage ayant pénétré dans la première matrice dopée 2a peut alors être absorbé par la première matrice dopée 2a. La première matrice dopée 2a peut alors émettre et amplifier le rayonnement laser qui se propage longitudinalement au barreau (c'est-à-dire sensiblement selon l'axe longitudinal 4). La deuxième matrice dopée 3a, 3b est susceptible d'absorber le rayonnement laser afin de limiter l'apparition d'émissions spontanées amplifiées (ASE pour « amplified spontaneous émission » en anglais) et des modes d'émission parasite.

De préférence, le taux d'absorption par la deuxième matrice dopée 3a, 3b est supérieur à 80%.

Avantageusement, la première matrice 2a est dopée par des ions luminescents tels que l'ion néodyme (Nd), l'ion ytterbium (Yb), l'ion erbium (Er), l'ion thulium (Tm), l'ion holmium (Ho) ou tout autre ion luminescent.

Selon un mode de réalisation, la première matrice dopée 2a et la deuxième matrice dopée 3a, 3b présentent des indices de réfraction supérieurs à un indice de réfraction d'un milieu dans lequel la plaque 1 est susceptible d'être utilisée. Ce saut d'indice entre les deux matrices dopées 2a et 3a, 3b et le milieu dans lequel la plaque 1 est susceptible d'être utilisée permet le confinement du faisceau de pompage dans la plaque 1.

Selon une variante, la première matrice dopée 2a présente une concentration de dopage qui évolue le long de l'axe longitudinal 4. La concentration de dopage évolue de façon qu'elle est moins importante à une première extrémité 11 de la première partie 2 proche de la ou des surfaces d'entrée 5 que celle située à une deuxième extrémité 12 la plus éloignée de la ou des surfaces d'entrée 5.

Selon une autre variante, la première matrice dopée 2a présente une concentration de dopage qui évolue radialement de façon que la concentration de dopage dans une zone centrale de la première partie 2 parallèle à l'axe longitudinal 4 est plus importante que la concentration de dopage dans région la plus éloignée de la région centrale.

Que cela soit radialement ou le long de l'axe longitudinal, la concentration de dopage peut évoluer continuellement. La concentration de dopage peut également évoluer discrètement par paliers ou par saut de concentrations.

Les deux variantes d'évolution de concentration de dopage peuvent être combinées.

Selon un mode de réalisation, la première partie 2 est prise en sandwich par la deuxième partie 3. La deuxième partie 3 comprend ainsi deux portions 3a, 3b entre lesquelles est insérée la première partie 2.

Selon un mode de réalisation préféré, la première partie 2 en forme de barreau allongé possède une section transversale de forme carrée ou rectangulaire. La deuxième partie 3 comprend deux portions 3a, 3b de sections rectangulaires. La première partie 2 est prise en sandwich entre les deux portions 3a, 3b. De façon non limitative, la section de forme carrée de la première partie 2 présente un côté S1 compris entre 2 mm et 8 mm, de préférence un côté de 3,5 mm.

Selon un autre mode de réalisation, la partie en forme de barreau allongé possède une section transversale de forme circulaire. La deuxième partie 3 comprend deux portions 3a, 3b de section transversale semi-annulaires. La première partie 2 est prise en sandwich entre les deux portions 3a, 3b de la deuxième partie 3 de façon que le côté circulaire convexe de chaque portion 3a, 3b épouse la forme circulaire de la première partie 2. De façon non limitative, la section transversale de forme circulaire de la première partie 2 présente un diamètre compris entre 2 mm et 8 mm, de préférence un diamètre de 4 mm.

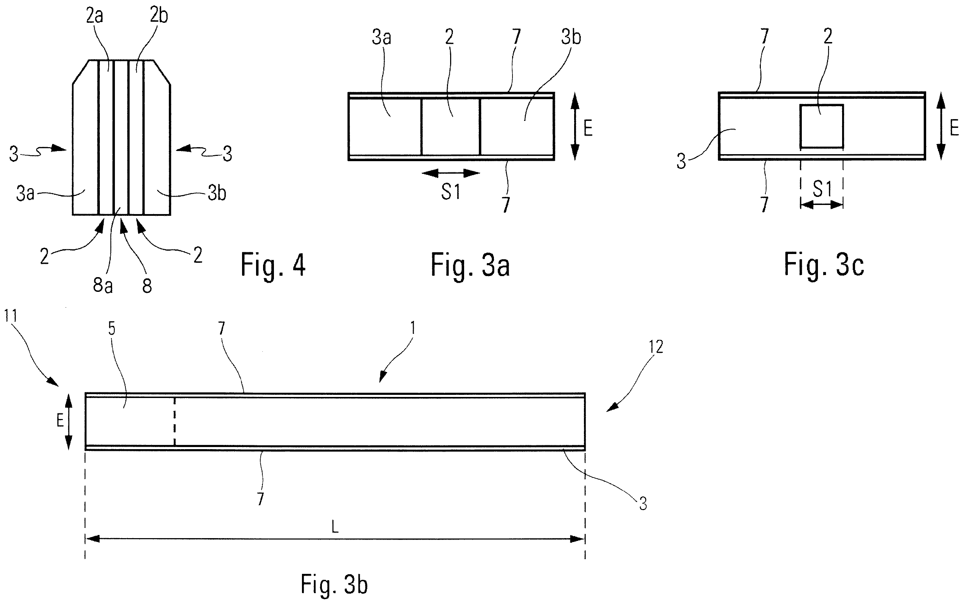

Selon un autre mode de réalisation (figure 3c), la deuxième partie 3 possède une épaisseur E supérieure à l'épaisseur de la première partie 2.

De façon non limitative, la section de forme carrée ou de forme circulaire de la première partie 2 possède un côté S1 de dimension égale à 3,5 mm tandis que la deuxième partie 3 présente une épaisseur E de dimension égale à 5 mm.

De façon avantageuse, la première partie 2 est disposée dans la deuxième partie 3 de façon centrée comme illustré par la figure 3c.

Avantageusement, deux surfaces opposées correspondant aux surfaces comportant la jonction entre les parties 2 et 3 et ayant les plus grandes dimensions sont recouvertes d'une couche réfléchissante, dite couche de guidage 7, comme représenté sur la figure 3. Cette couche de guidage 7 permet de maintenir le faisceau de pompage confiné dans la première partie 2 et la deuxième partie 3. De façon non limitative, la couche de guidage 7 présente un indice de réfraction inférieur à l'indice de réfraction de la première matrice dopée 2a et de la deuxième matrice dopée 3a, 3b. De préférence, la couche de guidage 7 présente un indice de réfraction inférieur à l'indice de réfraction de la première partie 2. De façon non limitative, l'indice de réfraction de la couche de guide 7 présente une valeur de 1,6 environ. La couche de guidage 7 peut être appliquée sur lesdites surfaces par des techniques de dépôt de couche mince, par exemple.

De façon avantageuse, la plaque d'élément actif 1 comprend en outre une couche d'absorption (non représentée) qui recouvre, au moins en partie, la couche de guidage 7. La couche d'absorption est susceptible d'absorber le rayonnement laser ou le rayonnement laser parasite. La couche d'absorption permet d'éliminer les trajets de rayonnement laser parasites. L'indice de réfraction de la couche d'absorption est proche ou égal à l'indice de réfraction de la couche de guidage 7.

De façon avantageuse, ces surfaces peuvent être utilisées pour interfacer la plaque 1 avec des puits thermiques afin de thermaliser le milieu amplificateur.

De façon non limitative, pour un faisceau de pompage bi-longueur d'onde émettant à 801 nm et 806 nm, la plaque 1, dont la deuxième partie 2 comprend un cristal de YAG dopé Nd, présente une longueur L comprise dans une plage allant de 45 mm à 65 mm, de préférence 60 mm. Cette longueur L peut permettre d'absorber plus de 80% du faisceau de pompage dans la première matrice dopée 2a sur une plage de température d'opération se situant autour de 100°C.

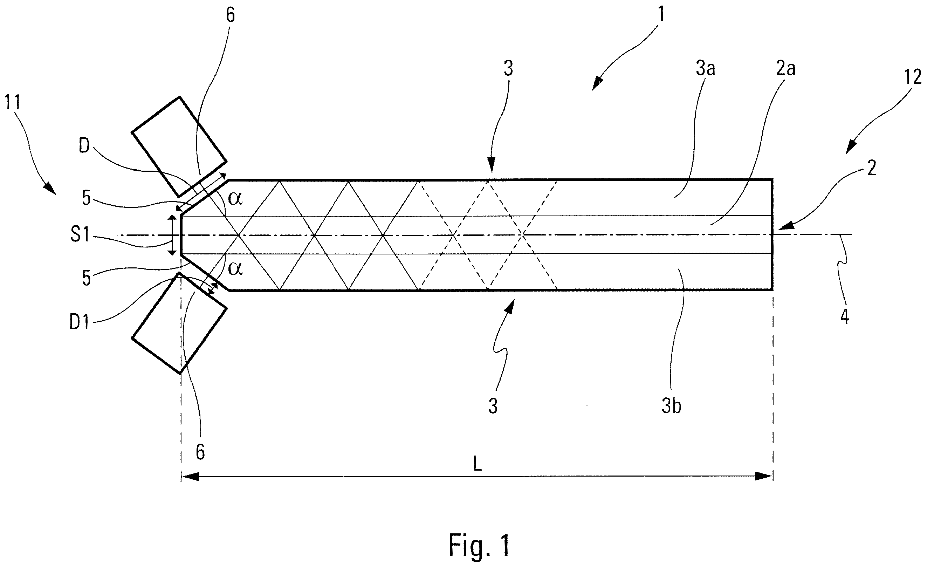

Dans un premier mode de réalisation préféré, comme représenté sur la figure 1, la deuxième partie 3a, 3b comprend au moins une surface d'entrée 5 du faisceau de pompage à la première extrémité 11 de la plaque 1. De préférence, la deuxième partie 3a, 3b comprend au moins deux surfaces d'entrée 5. Les deux surfaces d'entrée 5 sont disposées symétriquement par rapport à l'axe longitudinal 4. Elles sont en outre inclinées par rapport à cet axe longitudinal 4. L'angle d'inclinaison α est tel que le faisceau de pompage pénétrant dans la plaque 1 est guidé par réflexion totale interne et effectue au moins un double passage dans la première partie 2. Le faisceau de pompage est ainsi piégé dans la plaque 1 et est absorbé par la première matrice dopée 2a de la première partie 2 au cours de sa propagation.

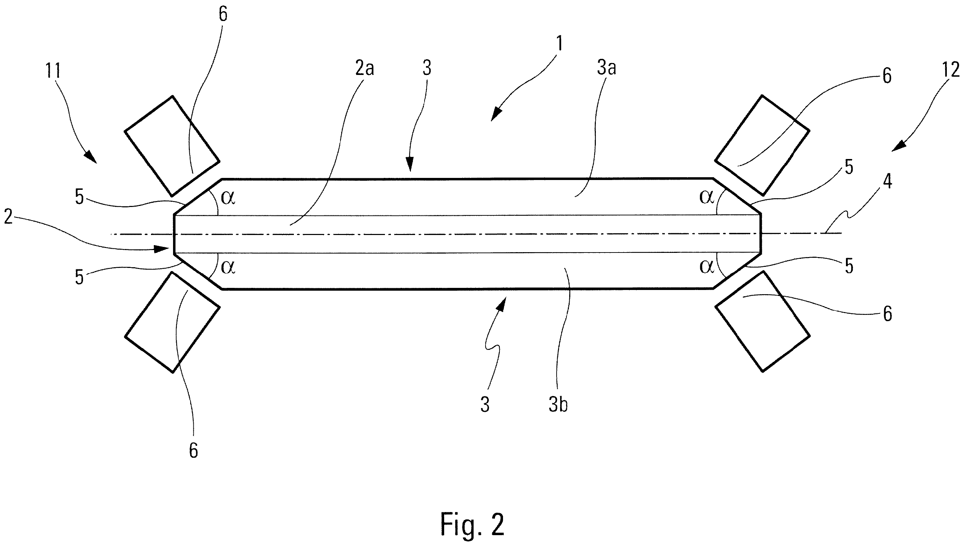

Dans un second mode de réalisation, comme représenté sur la figure 2, la deuxième partie 3 comprend quatre surfaces d'entrée 5 du faisceau de pompage. Deux surfaces d'entrée 5 du faisceau de pompage sont disposées symétriquement par rapport à l'axe longitudinal 4 à la première extrémité 11 de la plaque 1. Deux autres surfaces d'entrée 5 du faisceau de pompage sont disposées symétriquement par rapport à l'axe longitudinal 4 à la deuxième extrémité 12 de la plaque 1. Les quatre surfaces d'entrées 5 sont inclinées par rapport à l'axe longitudinal 4. Selon une variante préférée, l'angle d'inclinaison α de deux surfaces d'entrée à une première extrémité 11 de la plaque 1 est égal à l'angle d'inclinaison α des deux surfaces d'entrée 5 à la deuxième extrémité 12 de la plaque 1. Selon une autre variante, l'angle d'inclinaison α de deux surfaces d'entrée 5 à la première extrémité 11 de la plaque 1 est différent de l'angle d'inclinaison α des deux surfaces d'entrée 5 à la deuxième extrémité 12 de la plaque 1. Selon une variante préférée, les angles d'inclinaison α des surfaces d'entrée 5 d'une extrémité sont égaux. Selon une autre variante, les angles d'inclinaison α des surfaces d'entrée 5 d'une extrémité ne sont pas égaux.

De façon non limitative, l'angle d'inclinaison α est compris dans une plage allant de 35° à 45°, de préférence 40°. Cet angle peut être valable dans le cas d'une plaque 1 en YAG dont la deuxième partie 3 est au contact d'un milieu d'indice de réfraction sensiblement égal à 1.

De façon non limitative, les dimensions de chaque surface d'entrée 5 possède une largeur sensiblement égale à l'épaisseur E de la plaque 1 (figures 3a et 3b) et une longueur D comprise dans une plage allant de 5 mm à 12 mm, de préférence 6 mm (figures 1 et 3b), selon le type de diodes utilisé. Afin d'optimiser l'absorption du faisceau de pompage dans la première matrice dopée 2a, une longueur D de 5 mm est préférée. La longueur D dépend de la dimension de la source de pompage. Par exemple, pour une dimension de source de pompage donnée, la longueur D de la surface d'entrée 5 correspond à la dimension de la source de pompage augmentée de 1 mm.

Selon une particularité, la première matrice dopée 2a comprend un grenat d'yttrium-aluminium dopé au néodyme.

De façon non limitative, la première matrice dopée 2a présente un dopage aux ions néodyme compris entre 0,1% et 1%, de préférence 0,5%.

Selon une autre particularité, la deuxième matrice dopée 3a, 3b comprend un cristal dopé au samarium. Ce dopage au samarium permet de contrôler efficacement les émissions parasites telles les émissions spontanées amplifiées.

De façon non limitative, la deuxième matrice 3a, 3b est dopée au samarium à un taux compris entre 1% et 15%, de préférence 5%. Un dopage à 5% engendre une absorption supérieure à 2 cm⁻¹ à 1064 nm et aucune absorption sur la bande des 750 nm à 850 nm.

Avec une plaque 1 ayant une première matrice dopée 2a comprenant un grenat d'yttrium-aluminium dopé au néodyme et une deuxième matrice dopée 3a, 3b comprenant un cristal dopé au samarium, il est possible d'obtenir un taux d'absorption du faisceau de pompage par la première matrice dopée 2a de 77% environ à une température de -30°C, un taux de 90% environ à une température de 20°C et un taux de 87% environ à 70°C.

Du fait de la composante transverse du faisceau de pompage, le dopage en ions est de préférence ajusté de sorte que le gain intégré sur la longueur du barreau présente une répartition homogène et ne présente pas de surintensité sur les bords du barreau. La répartition peut être ajustée à l'aide d'un faisceau de pompage à multi-longueur d'onde.

Selon un mode de réalisation, les parties 2, 3 de la plaque 1 sont fabriquées par un procédé céramique.

Selon un autre mode de réalisation, les parties 2, 3 de la plaque 1 sont fabriquées à partir de monocristaux. Dans ce dernier mode de réalisation, la première partie 2 devra adhérer à la deuxième partie 3 avec le risque que soit présente une certaine quantité de micro-défauts par unité de surface aux interfaces.

Selon l'invention (figure 4), la plaque 1 comprend la première partie 2 susceptible d'amplifier le rayonnement laser se propageant longitudinalement et la deuxième partie 3 susceptible d'absorber les radiations parasites du rayonnement laser, ou les radiations parasites présentant la longueur d'onde du rayonnement laser. La plaque 1 comprend en outre au moins une troisième partie 8 en forme de barreau allongé selon l'axe longitudinal 4 qui inclut une troisième matrice dopée 8a susceptible d'absorber un rayonnement laser parasite. La première partie 2 comporte deux portions 2a, 2b entre lesquelles la troisième partie est prise en sandwich. Selon une première variante (figure 4), la troisième partie 8 est en forme de barreau allongé possédant une section transversale carrée. La première partie 2 comporte deux portions 2a, 2b, possédant une section transversale rectangulaire, entre lesquelles la troisième partie 8 est prise en sandwich. Selon une deuxième variante, la troisième partie 8 en forme de barreau allongé possède une section transversale circulaire. La première partie 2 comporte deux portions 2a, 2b, possédant une section transversale semi-annulaire qui épouse la forme de la troisième partie 8 qui est prise en sandwich entre les deux portions 2a, 2b de la première partie 2.

De préférence, la troisième partie 8 est même type que la deuxième partie 3 avec une troisième matrice dopée 8a de la même manière que la deuxième matrice dopée 3a, 3b. Ceci forme une plaque comprenant un ensemble de plusieurs milieux amplificateurs séparés par une ou plusieurs zones dopées ou non dopées.

La plaque 1 telle que décrite ci-dessus peut être intégrée dans une source laser.

Ainsi, la source laser (non représentée) comprend :
- une plaque d'élément actif 1 pour source laser du type de celle décrite ci-dessus,
- au moins une source de pompage 6 susceptible d'émettre un faisceau de pompage pénétrant dans la plaque d'élément actif 1.

Dans un mode de réalisation préféré, la ou les sources de pompage 6 comprennent au moins une diode laser. De préférence, la ou les sources de pompages 6 comprennent au moins un empilement (« stack » en anglais) de diodes. De préférence, les surfaces d'entrée 5 possèdent des dimensions ajustées à la surface des empilements de diodes.

Différents empilements de diodes peuvent être envisagés tels que des barrettes de 10 mm, de 5 mm ou de 3 mm.

De préférence, la source laser comprend deux empilements de diodes composés d'une pluralité de barrettes de largeur 5 mm. Ceci conduit à une puissance de crête potentielle de plusieurs kilowatts. De façon non limitative, ces barrettes sont multi-longueur d'onde. Par exemple, elles peuvent être bi-longueur d'onde à 801 nm et 806 nm ou tri-longueur d'onde à 793 nm, 807 nm et 809 nm. De plus, l'écart entre chaque barrette d'un empilement de diodes peut présenter une valeur disponible comprise entre 150 µm et 1,6 mm selon le besoin et les fabricants.

Avantageusement, les surfaces émettrices des sources de pompage sont positionnées à une distance D1 de chaque surface d'entrée 5 de la deuxième partie 3. De façon non limitative, la distance D1 est sensiblement égale à 500 µm.

Ainsi de manière non limitative, la source laser peut présenter une longueur pouvant atteindre 73 mm environ ; ce qui donne un gain en longueur de 1,78 par rapport aux sources lasers de désignateurs dits athermaux.

La présente description détaille différents modes de réalisation en référence à des figures et/ou des caractéristiques techniques. L'homme du métier comprendra que les diverses caractéristiques techniques des divers modes peuvent être combinées entre elles pour obtenir d'autres modes de réalisation, à moins que l'inverse ne soit explicitement mentionné ou que ces caractéristiques techniques ne soient incompatibles. De même, une caractéristique technique d'un mode de réalisation peut être isolée des autres caractéristiques techniques de ce mode de réalisation à moins que l'inverse ne soit mentionné. Dans la présente description, de nombreux détails spécifiques sont fournis à titre illustratif et nullement limitatif, de façon à détailler précisément l'invention. L'homme de métier comprendra cependant que l'invention peut être réalisée en l'absence d'un ou plusieurs de ces détails spécifiques ou avec des variantes. À d'autres occasions, certains aspects ne sont pas détaillés de façon à éviter d'obscurcir et alourdir la présente description et l'homme de métier comprendra que des moyens divers et variés pourront être utilisés et que l'invention n'est pas limitée aux seuls exemples décrits.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Plaque d'élément actif pour source laser, ladite plaque comprenant.
- au moins une surface d'entrée (5) d'un faisceau de pompage,
- une première partie (2) en forme de barreau allongé selon un axe longitudinal (4) qui inclut une première matrice dopée (2a) susceptible d'absorber le faisceau de pompage pour amplifier un rayonnement laser se propageant longitudinalement,
- une deuxième partie (3) recouvrant au moins partiellement la première partie (2), la deuxième partie (3) incluant une deuxième matrice dopée (3a, 3b) susceptible d'absorber le rayonnement laser et d'être transparente au faisceau de pompage, **caractérisée en ce que** ladite plaque comprend en outre :
- au moins une troisième partie (8) en forme de barreau allongé selon l'axe longitudinal (4) qui inclut une troisième matrice dopée (8a) susceptible d'absorber un rayonnement laser parasite, la première partie (2) comportant deux sections (2a, 2b) entre lesquelles la troisième partie (8) est prise en sandwich.

2. Plaque selon la revendication 1,
**caractérisée en ce que** la première matrice dopée (2a) présente un indice de réfraction sensiblement égal à l'indice de réfraction de la deuxième matrice dopée (3a, 3b).

3. Plaque selon l'une quelconque des revendications 1 ou 2,
**caractérisée en ce que** la première matrice dopée (2a) et la deuxième matrice dopée (3a, 3b) présentent des indices de réfraction supérieurs à un indice de réfraction d'un milieu dans lequel la plaque (1) est susceptible d'être utilisée.

4. Plaque selon l'une quelconque des revendications 1 à 3,
**caractérisée en ce que** la première matrice dopée (2a) présente une concentration de dopage qui évolue le long de l'axe longitudinal (4) de façon que la concentration de dopage à une première extrémité (11) de la première partie (2) proche de la ou des surfaces d'entrée (5) est moins importante que la concentration de dopage à une deuxième extrémité (12) la plus éloignée de la ou des surfaces d'entrée (5).

5. Plaque selon l'une quelconque des revendications 1 à 4,
**caractérisée en ce que** la première matrice dopée (2a) présente une concentration de dopage qui évolue radialement de façon que la concentration de dopage dans une zone centrale de la première partie (2) parallèle à l'axe longitudinal (4) est plus importante que la concentration de dopage dans une zone la plus éloignée de la zone centrale.

6. Plaque selon l'une quelconque des revendications 1 à 5,
**caractérisée en ce que** la première partie (2) en forme de barreau allongé possède une section transversale carrée, la deuxième partie (3) comprenant deux portions de sections transversales rectangulaires entre lesquelles la première partie (2) est prise en sandwich.

7. Plaque selon l'une quelconque des revendications 1 à 6,
**caractérisée en ce que** la première partie (2) en forme de barreau allongé possède une section transversale circulaire, la deuxième partie (3) comprenant deux portions (3a, 3b) de section transversale semi-annulaires épousant la forme de la première partie (2) prise en sandwich entre les deux portions (3a, 3b) de la deuxième partie (3).

8. Plaque selon l'une quelconque des revendications 1 à 7,
**caractérisée en ce que** la deuxième partie (3) possède une épaisseur (E) supérieure à l'épaisseur de la première partie (2).

9. Plaque selon l'une quelconque des revendications 1 à 8,
**caractérisée en ce que** la deuxième partie (3) comprend deux surfaces (5) d'entrée du faisceau de pompage disposées symétriquement par rapport à l'axe longitudinal (4) à une première extrémité (11) de la plaque (1), les deux surfaces d'entrée (5) étant inclinées par rapport à l'axe longitudinal (4).

10. Plaque selon l'une quelconque des revendications 1 à 9,
**caractérisée en ce que** la deuxième partie (3) comprend quatre surfaces d'entrée (5) du faisceau de pompage, deux surfaces d'entrée (5) du faisceau de pompage étant disposées symétriquement par rapport à l'axe longitudinal (4) à une première extrémité (11) de la plaque (1) et deux surfaces d'entrée (5) du faisceau de pompage étant disposées symétriquement par rapport à l'axe longitudinal (4) à une deuxième extrémité (12) de la plaque (1), les quatre surfaces d'entrées (5) étant inclinées par rapport à l'axe longitudinal (4).

11. Plaque selon l'une quelconque des revendications 1 à 10,
**caractérisée en ce que** la première matrice dopée (2a) comprend un grenat d'yttrium-aluminium dopé au néodyme.

12. Plaque selon l'une quelconque des revendications 1 à 11,
**caractérisée en ce que** la deuxième matrice dopée (3a, 3b) comprend un cristal dopé au samarium.

13. Plaque selon l'une quelconque des revendications 1 à 12,
**caractérisée en ce qu'**elle comprend au moins une couche de guidage (7) qui recouvre deux surfaces qui correspondent aux surfaces comportant la jonction entre la première partie (2) et la deuxième partie (3) et ayant les plus grandes dimensions, la couche de guidage (7) présentant un indice de réfraction inférieur à l'indice de réfraction de la première matrice dopée (2a) et de la deuxième matrice dopée (3a, 3b).

14. Plaque selon la revendication 13,
**caractérisée en ce qu'**elle comprend en outre une couche d'absorption qui recouvre, au moins en partie, la couche de guidage (7), la couche d'absorption étant susceptible d'absorber le rayonnement laser.

15. Source laser comprenant :
- une plaque d'élément actif (1) pour source laser,
- au moins une source de pompage (6) susceptible d'émettre un faisceau de pompage pénétrant dans la plaque d'élément actif (1),
**caractérisée en ce que** la plaque d'élément actif (1) est une plaque d'élément actif du type de celui spécifié sous l'une quelconque des revendications 1 à 14.

16. Source laser selon la revendication 15,
**caractérisée en ce que** la ou les sources de pompage (6) comprennent au moins une diode laser.

## Patentansprüche

1. Aktivelement-Platte für eine Laserquelle, wobei die Platte umfasst:
- mindestens eine Eintrittsfläche (5) für einen Pumpstrahl,
- einen ersten Teil (2) in Form einer entlang einer Längsachse (4) langgestreckten Stange, die eine erste dotierte Matrix (2a) beinhaltet, welche den Pumpstrahl absorbieren kann, um eine Laserstrahlung, die sich in Längsrichtung ausbreitet, zu verstärken,
- einen zweiten Teil (3), der den ersten Teil (2) mindestens teilweise bedeckt, wobei der zweite Teil (3) eine zweite dotierte Matrix (3a, 3b) beinhaltet, welche die Laserstrahlung absorbieren und für den Pumpstrahl durchlässig sein kann, **dadurch gekennzeichnet, dass** die Platte weiter umfasst:
- mindestens einen dritten Teil (8) in Form einer entlang der Längsachse (4) langgestreckten Stange, die eine dritte dotierte Matrix (8a) beinhaltet, welche eine parasitäre Laserstrahlung absorbieren kann, wobei der erste Teil (2) zwei Abschnitte (2a, 2b) umfasst, zwischen denen der dritte Teil (8) sandwichartig eingefasst ist.

2. Platte nach Anspruch 1,
**dadurch gekennzeichnet, dass** die erste dotierte Matrix (2a) einen Brechungsindex aufweist, der im Wesentlichen gleich dem Brechungsindex der zweiten dotierten Matrix (3a, 3b) ist.

3. Platte nach einem der Ansprüche 1 oder 2,
**dadurch gekennzeichnet, dass** die erste dotierte Matrix (2a) und die zweite dotierte Matrix (3a, 3b) Brechungsindizes aufweisen, die höher sind als ein Brechungsindex eines Mediums, in dem die Platte (1) verwendet werden kann.

4. Platte nach einem der Ansprüche 1 bis 3,
**dadurch gekennzeichnet, dass** die erste dotierte Matrix (2a) eine Dotierungskonzentration aufweist, die sich entlang der Längsachse (4) so entwickelt, dass die Dotierungskonzentration an einem ersten Ende (11) des ersten Teils (2) nahe der oder den Eintrittsflächen (5) niedriger ist als die Dotierungskonzentration an einem zweiten Ende (12), das am weitesten von der oder den Eintrittsflächen (5) entfernt ist.

5. Platte nach einem der Ansprüche 1 bis 4,
**dadurch gekennzeichnet, dass** die erste dotierte Matrix (2a) eine Dotierungskonzentration aufweist, die sich radial so entwickelt, dass die Dotierungskonzentration in einem mittleren Bereich des ersten Teils (2) parallel zur Längsachse (4) höher ist als die Dotierungskonzentration in einem Bereich, der am weitesten vom mittleren Bereich entfernt ist.

6. Platte nach einem der Ansprüche 1 bis 5,
**dadurch gekennzeichnet, dass** der erste Teil (2) in Form einer langgestreckten Stange einen quadratischen Querschnitt besitzt, wobei der zweite Teil (3) zwei Abschnitte mit rechteckigen Querschnitten umfasst, zwischen denen der erste Teil (2) sandwichartig eingefasst ist.

7. Platte nach einem der Ansprüche 1 bis 6,
**dadurch gekennzeichnet, dass** der erste Teil (2) in Form einer langgestreckten Stange einen kreisförmigen Querschnitt besitzt, wobei der zweite Teil (3) zwei Abschnitte (3a, 3b) mit halbringförmigem Querschnitt umfasst, die sich der Form des ersten Teils (2), der sandwichartig zwischen den zwei Abschnitten (3a, 3b) des zweiten Teils (3) eingefasst ist, anschmiegen.

8. Platte nach einem der Ansprüche 1 bis 7,
**dadurch gekennzeichnet, dass** der zweite Teil (3) eine Dicke (E) besitzt, die größer ist als die Dicke des ersten Teils (2).

9. Platte nach einem der Ansprüche 1 bis 8,
**dadurch gekennzeichnet, dass** der zweite Teil (3) zwei Eintrittsflächen (5) für den Pumpstrahl umfasst, die symmetrisch in Bezug auf die Längsachse (4) an einem ersten Ende (11) der Platte (1) angeordnet sind, wobei die zwei Eintrittsflächen (5) in Bezug auf die Längsachse (4) geneigt sind.

10. Platte nach einem der Ansprüche 1 bis 9,
**dadurch gekennzeichnet, dass** der zweite Teil (3) vier Eintrittsflächen (5) für den Pumpstrahl umfasst, wobei zwei Eintrittsflächen (5) für den Pumpstrahl symmetrisch in Bezug auf die Längsachse (4) an einem ersten Ende (11) der Platte (1) angeordnet sind und zwei Eintrittsflächen (5) für den Pumpstrahl symmetrisch in Bezug auf die Längsachse (4) an einem zweiten Ende (12) der Platte (1) angeordnet sind, wobei die vier Eintrittsflächen (5) in Bezug auf die Längsachse (4) geneigt sind.

11. Platte nach einem der Ansprüche 1 bis 10,
**dadurch gekennzeichnet, dass** die erste dotierte Matrix (2a) einen Neodym-dotierten Yttrium-Aluminium-Granat umfasst.

12. Platte nach einem der Ansprüche 1 bis 11,
**dadurch gekennzeichnet, dass** die zweite dotierte Matrix (3a, 3b) einen Samarium-dotierten Kristall umfasst.

13. Platte nach einem der Ansprüche 1 bis 12,
**dadurch gekennzeichnet, dass** sie mindestens eine Führungsschicht (7) umfasst, die zwei Flächen bedeckt, welche den Flächen entsprechen, die den Übergang zwischen dem ersten Teil (2) und dem zweiten Teil (3) umfassen und die größten Abmessungen aufweisen, wobei die Führungsschicht (7) einen Brechungsindex aufweist, der niedriger ist als der Brechungsindex der ersten dotierten Matrix (2a) und der zweiten dotierten Matrix (3a, 3b).

14. Platte nach Anspruch 13,
**dadurch gekennzeichnet, dass** sie weiter eine Absorptionsschicht umfasst, die die Führungsschicht (7) mindestens zum Teil bedeckt, wobei die Absorptionsschicht die Laserstrahlung absorbieren kann.

15. Laserquelle, umfassend:
- eine Aktivelement-Platte (1) für eine Laserquelle,
- mindestens eine Pumpquelle (6), die einen Pumpstrahl emittieren kann, der in die Aktivelement-Platte (1) eindringt,
**dadurch gekennzeichnet, dass** es sich bei der Aktivelement-Platte (1) um eine Aktivelement-Platte von demjenigen Typ handelt, der in einem der Ansprüche 1 bis 14 spezifiziert ist.

16. Laserquelle nach Anspruch 15,
**dadurch gekennzeichnet, dass** die Pumpquelle oder Pumpquellen (6) mindestens eine Laserdiode umfassen.

## Claims

1. Active element slab for a laser source,
said slab comprising:
- at least one input surface (5) of a pump beam,
- a first section (2) in the shape of an elongated bar along a longitudinal axis (4) that includes a first doped matrix (2a) capable of absorbing the pump beam to amplify a laser beam travelling longitudinally,
- a second section (3) that covers, at least partially, the first section (2), the second section (3) including a second doped matrix (3a, 3b) that is capable of absorbing the laser beam and of being transparent to the pump beam, **characterized in that** said slab further comprises:
- at least a third section (8) in the shape of an elongated bar along the longitudinal axis (4), which includes a third doped matrix (8a) that is capable of absorbing parasitic laser beam, the first section (2) including two parts (2a, 2b) between which the third section (8) is sandwiched.

2. Slab according to claim 1,
**characterized in that** the first doped matrix (2a) features a refractive index substantially equal to the refractive index of the second doped matrix (3a, 3b).

3. Slab according to any of the claims 1 or 2,
**characterized in that** the first doped matrix (2a) and the second doped matrix (3a, 3b) have refractive indexes that are greater than a refractive index in an environment in which the slab (1) is likely to be used.

4. Slab according to any of claims 1 to 3,
**characterized in that** the first doped matrix (2a) has a doping concentration that evolves along the longitudinal axis (4) so that the doping concentration at a first end (11) of the first section (2) close to the input surface or surfaces (5) is less important than the doping concentration at a second end (12), which is further away from the input surface or surfaces (5).

5. Slab according to any of claims 1 to 4,
**characterized in that** the first doped matrix (2a) has a doping concentration that evolves radially so that the doping concentration in a central area of the first section (2) parallel to the longitudinal axis (4) is more important than the doping concentration in an area furthest away from the central area.

6. Slab according to any of claims 1 to 5,
**characterized in that** the first section (2) in the shape of an elongated bar has a square cross section, the second section (3) including two parts (3a, 3b) with rectangular cross sections between which the first section (2) is sandwiched.

7. Slab according to any of claims 1 to 6,
**characterized in that** the first section (2) in the shape of an elongated bar has a circular cross section, the second section (3) including two parts (3a, 3b) with semi-circular cross sections that embrace the shape of the first section (2), which is sandwiched between the two parts (3a, 3b) of the second section (3).

8. Slab according to any of claims 1 to 7,
**characterized in that** the second section (3) has a thickness (E) that is greater than the thickness of the first section (2).

9. Slab according to any of claims 1 to 8,
**characterized in that** the second section (3) includes two input surfaces (5) of the pump beam arranged symmetrically to the longitudinal axis (4) at a first end (11) of the slab (1), the two input surfaces (5) being tilted in relation to the longitudinal axis (4).

10. Slab according to any of claims 1 to 9,
**characterized in that** the second section (3) includes four input surfaces (5) of the pump beam, two input surfaces (5) of the pump beam being arranged symmetrically to the longitudinal axis (4) at a first end (11) of the slab (1) and two input surfaces (5) of the pump beam being arranged symmetrically to the longitudinal axis (4) at a second end (12) of the slab (1), the four input surfaces (5) being tilted in relation to the longitudinal axis (4).

11. Slab according to any of claims 1 to 10,
**characterized in that** the first doped matrix (2a) contains a neodymium-doped yttrium-aluminium garnet.

12. Slab according to any of claims 1 to 11,
**characterized in that** the second doped matrix (3a, 3b) includes a samarium-doped crystal.

13. Slab according to the any of claims 1 to 12,
**characterized in that** it comprises at least a guiding layer (7) that coats two surfaces that correspond to the surfaces that include the junction between the first section (2) and the second section (3) and that have the biggest dimensions, the guiding layer (7) having a refractive index that is lower than the refractive index of the first doped matrix (2a) and the second doped matrix (3a, 3b).

14. Slab according to claim 13,
**characterized in that** it further comprises an absorbing layer that covers, at least partially, the guiding layer (7), the absorbing layer being capable of absorbing the laser beam.

15. Laser source that includes:
- an active element slab (1) for a laser source,
- at least one pump source (6) capable of emitting a pump beam penetrating the active element slab (1),
**characterized in that** the active element slab (1) is an active element slab of the same type as that specified under any of the claims 1 to 14.

16. Laser source according to claim 15,
**characterized in that** the pump source or sources (6) include at least one laser diode.
